# EUROPÄISCHE PATENTSCHRIFT

(11) **EP 0 836 634 B1**
(45) Veröffentlichungstag und Bekanntmachung des Hinweises auf die Patenterteilung: **02.10.2002**
(21) Anmeldenummer: 96922909.5
(22) Anmeldetag: 04.07.1996
(51) Int. Cl.: C08K 5/5398, C08K 5/53, C08L 1/06, C07F 9/6568

(54) **MIT PHOSPHORVERBINDUNGEN FLAMMHEMMEND AUSGERÜSTETE REGENERATCELLULOSE**
REGENERATED CELLULOSE INCORPORATING PHOSPHOROUS COMPOUNDS SO AS TO BE FLAME-RETARDANT
CELLULOSE REGENEREE AYANT SUBI UN TRAITEMENT RETARDATEUR DE COMBUSTION AVEC DES COMPOSES PHOSPHORES

(30) Priorität: 05.07.1995 DE 19524537
(43) Veröffentlichungstag der Anmeldung: 22.04.1998
(73) Patentinhaber: Lenzing Aktiengesellschaft, A-4860 Lenzing (AT)
(72) Erfinder: WOLF, Rainer, CH-4123 Allschwil (CH); RÜF, Hartmut, A-4840 Vöcklabruck (AT)
(86) Internationale Anmeldenummer: EP9602945
(87) Internationale Veröffentlichungsnummer: WO97002315

(56) Entgegenhaltungen:
- EP-A- 0 330 979
- EP-A- 0 336 004
- EP-A- 0 574 870
- GB-A- 1 464 545
- US-A- 4 083 833
- US-A- 4 855 507
- NEVELL, T.P. ET AL.: "Cellulose Chemistry and its applications" , ELLIS HORWOOD , CHICHESTER XP002014048 Siehe Seite 425, letzte Zeile siehe Seite 437, Absatz 3 - Seite 438, Absatz 2

## Beschreibung

Gegenstand der Erfindung sind Regeneratcellulosen, die ausgewählte Phosphorverbindungen als flammhemmende Mittel enthalten.

Insbesondere betrifft die Erfindung flammhemmend ausgerüstete Regeneratcellulosen, die mindestens eine Verbindung der Formel I 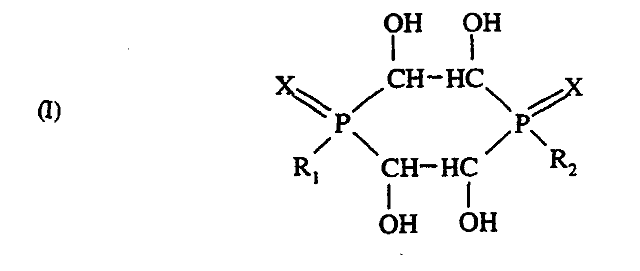 enthalten, worin
- R₁, R₂: unabhängig voneinander einen unsubstituierten oder substituierten C₁₋₁₂Alkyl-, C₅₋₇Cycloalkyl-, C₇₋₁₂Aralkyl- oder C₆₋₁₂Aryl-Rest und
- X: Sauerstoff oder Schwefel
bedeuten.

In Formel I bedeutet R₁ und R₂ vorzugsweise einen iso-Butylrest, und X ist vorzugsweise Sauerstoff.

Die Verbindungen der Formel I sind bekannt und lassen sich auf eine dem Fachmann bekannte Weise herstellen, z. B. nach dem in USP 4 855 507 beschriebenen Verfahren.

Ihre Verwendung als Flammschutzmittel in vollsynthetischen Polymeren, insbesondere Polyolefinen, schlagzähmodifizierten Polystyrolen, Polyamid, Polyphenylenoxid, mit schlagzähmodifizierten Polystyrolen modifiziertes Polyphenylenoxid, Polyethylentherephthalat und Polyurethanen ist ebenfalls bekannt. Ueberraschenderweise wurde gefunden, dass sich Verbindungen der Formel I auch zum flammhemmenden Ausrüsten von Regeneratcellulose eignen. Gegenstand der Erfindung ist daher die Verwendung von Verbindungen der Formel I als flammhemmendes Mittel für Regeneratcellulose und ein Verfahren zum flammhemmenden Ausrüsten von Regeneratcellulose durch Zusatz von Verbindungen der Formel I oder diese Verbindungen enthaltende Dispersionen.

"Regenerat- oder Hydratcellulose" ist ein wohlbekannter Ausdruck. Regeneratcellulose wird im allgemeinen dadurch hergestellt, dass man die Cellulose nach bekannten Verfahren in Lösung bringt. Dies geschieht durch Lösen der Cellulose in geeigneten organischen Lösungsmitteln, wie Aminoxiden, insbesondere N-Methylmorpholinoxid ("Lyocellverfahren") oder durch Ueberführen der Cellulose in lösliche Cellulosederivate, wie z. B. Xanthogenate ("Viskoseverfahren") oder lösliche Tetranunkupfer(II)-hydroxid-Komplexe ("Glanzstoff-Verfahren"). Die Verbindung(en) der Formel I werden als solche oder dispergiert in einem geeigneten Medium der Celluloselösung zugesetzt. Die Zugabe erfolgt nach bekannten Verfahren kontinuierlich oder diskontinuierlich, z. B. batchweise, gefolgt von kräftigem Rühren, um die Verbindung(en) der Formel I bzw. eine Dispersion davon gleichmässig in der Celluloselösung zu verteilen. Die Regeneratcellulose wird aus der vorgenannten, die Verbindung(en) der Formel I enthaltenden Celluloselösung nach bekannten Verfahren ausgefällt, z. B. durch Pressen dieser Lösung durch feine Düsen oder Schlitze zur Herstellung von Filamenten oder Folien. Die technisch wichtigen Eigenschaften der Regeneratcellulose werden durch Zusatz des erfindungsgemässen flammhemmenden Mittels der Formel I nur unwesentlich beeinflusst.

Die erfindungsgemässe flammgehemmte Regeneratcellulose wird aus Lösungen der Cellulose in Aminoxiden, vorzugsweise N-Methylmorpholinoxid (NMMO), ausgefällt.

Es ist allgemein bekannt, dass sich Cellulose in wässrigen tertiären Aminoxiden, insbesondere wässrigem N-Methylmorpholinoxid, hervorragend lösen lässt. Die Herstellung von cellulosischen Produkten aus solchen Lösungen der Cellulose in Aminoxiden wird in bekannter Weise durchgeführt, indem die Lösung durch ein Formgebungswerkzeug extrudiert und über einen Luftspalt unter Verzug in ein wässriges Fällbad geführt wird, wodurch die Cellulose aus der Lösung ausfällt.

Es hat sich gezeigt, dass sich die Verbindungen der Formel (I) und hier insbesondere die Verbindung der Formel (I), bei welcher R₁ und R₂ iso-Butyl bedeutet und X Sauerstoff bedeutet, im Unterschied zu kommerziellen Produkten des Standes der Technik als sehr stabil gegenüber den Bedingungen dieses Verfahrens erweisen und somit in ökonomischer Weise ein flammfestes cellulosisches Produkt erhalten werden kann.

Die flammgehemmte Cellulose kann je nach Formgebung z.B. als Faser oder als Folie vorliegen.

Erfindungsgemässe flammhemmend ausgerüstete Regeneratcellulose enthält die Verbindung(en) der Formel I in Mengen von 5 bis 35 Gew.-%, vorzugsweise 10 bis 25 Gew.-%, insbesondere 25 Gew.-%, bezogen auf 100 Gew.-% reine, regenerierte Cellulose. Entsprechende Mengen der Verbindung(en) der Formel I werden der Celluloselösung vor der Formgebung zugegeben.

Beim Einsatz im Lyocell-Verfahren können die Verbindungen der Formel (I) jedoch auch zu einer wässrigen Suspension von Cellulose in tertiären Aminoxiden zugegeben werden, welche zur Lösungsherstellung herangezogen wird.

Die Herstellung der erfindungsgemässen Dispersionen erfolgt auf allgemein bekannte Weise, z. B. duch Mahlen eines konzentrierten Gemisches bestehend aus Dispersionsmittel, Dispersionsmedium und Verbindung(en) der Formel I, z. B. in einer Kugel-, Sand-, Glasperlen- oder Kömerquartz-Mühle, bis die Grösse der ungelösten Partikel im Mittel 0,5 bis 5 µm, vorzugsweise 1 µm ist, und gegebenenfalls Einstellen der gewünschten Konzentration durch Hinzufügen von Dispersionsmedium, welches bevorzugt Wasser ist.

Im allgemeinen enthalten die erfindungsgemässen Dispersionen 10 bis 60 Gew.-%, vorzugsweise 15 bis 50 Gew.-%, insbesondere 20 bis 40 Gew.-% einer Verbindung oder eines Gemisches von Verbindungen der Formel I, 4 bis 50 Gew.-%, vorzugsweise 5 bis 45 Gew.-% und insbesondere 6 bis 35 Gew.-% eines Dispersionsmittels, berechnet auf das Gewicht der Verbindung(en) der Formel I. Der Rest ist Dispersionsmedium, vorzugsweise Wasser.

In den folgenden Beispielen bedeuten die Teile Gewichtsteile und die Prozente, falls nicht anders angegeben, Gewichtsprozente.

### I. Herstellung von erfindungsgemässen Dispersionen

### Beispiel 1

Eine 25%-ige wässrige Dispersion der Verbindung der folgenden Formel (1) 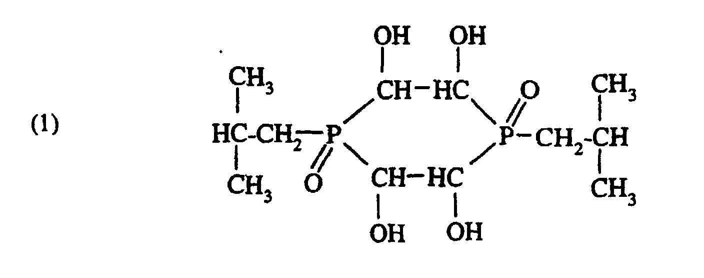 wird wie folgt hergestellt:

25 Teile einer Verbindung der Formel I und 6,25 Teile eines Dispersionsmittels auf Basis von Natriumnaphthalinsulfonat werden vermischt und in 68,75 Teile Wasser eingerührt. Die Mischung wird sodann in einer Kugelmühle vom Typ Dyno KDL-Pilot unter Verwendung von 1100 ml Körnerquartz gemahlen. Nach dem ersten Durchgang durch die Mühle wird die Mischung 68 Stunden lang im Kreislauf gemahlen. Danach wird die Dispersion gefiltert.

### II. Herstellung von erfindungsgemässen Regeneratcellulosen

### Beispiel 2

15 Teile einer gemäss Beispiel 1 hergestellten Dispersion werden unter Rühren in 200 Teile einer Xanthatlösung, die von 18 Teilen α-Cellulose hergestellt wurde, eingebracht. Diese Lösung wird durch die Düsen einer konventionellen Spinnvorrichtung in ein Fällungsbad, das pro Liter 125 g Schwefelsäure (H₂SO₄), 240 g wasserfreies Natriumsulfat (Na₂SO₄) und 12 g wasserfreies Zinksulfat (ZnSO₄) enthält, gepresst. Die so erhaltenen Fasern werden gründlich gewaschen, getrocknet und zu einem Gewirke verarbeitet. Dieses Gewirke wird einem Entflammbarkeitstest nach der Methode von Fenimore und Martin (Modern Plastics, November 1966) unterworfen, wobei der LOI-Wert (oxygen limit value) bestimmt wird.

Der Vergleich zwischen dem erfindungsgemäss flammhemmend ausgerüsteten Cellulosegewirke zeigt deutlich reduzierte Entflammbarkeit durch Anwesenheit der Verbindung (1):
- LOI-Wert des erfindungsgemäss behandelten Cellulosegewirkes: 27
- LOI-Wert des unbehandelten Cellulosegewirkes: 19

### Beispiel 3

Eine wässrige Dispersion, die 10 Gew.% der Verbindung der Formel (1) aus Beispiel 1 und 3 Gew.% des Tensids Hypermer PS 2 der Fa. ICI enthielt, wurde in einer Perlmühle gemahlen, bis bei mikroskopischer Beurteilung keine Teilchen des Flammschutzmittels oberhalb von 5 µm sichtbar waren.

In einem Kneter HKD-T 0,6 der Fa. IKA-Labortechnik wurde aus 233 g 50%igem NMMO, 14,5 g Zellstoff Buckeye V 5 und 45 g der obigen Dispersion mittels Abdampfen der überschüssigen Wassermenge eine Spinnmasse der Zusammensetzung 9,0% Cellulose / 3% Verbindung (1) / 76% NMMO / 12% H₂O hergestellt.

Als Spinnapparat wurde ein in der Kunststoffverarbeitung gebräuchliches Schmelzindexgerät der Fa. Davenport verwendet. Dieses Gerät besteht aus einem beheizten temperaturgeregelten Zylinder, in den die Spinnmasse eingefüllt wird. Mittel eines Kolbens, der im Originalgerät mit einem Kolben belastet wird (in der eingesetzten umgebauten Version erfolgt der Kolbenvortrieb über einen Schrittmotor) wird die Spinnmasse durch die an der Unterseite des Zylinders angebrachte Spinndüse extrudiert.

Die Spinnmasse wurde mit einer Temperatur von 100°C und einer Ausstossmenge von 0,025g/Loch/min durch eine 1-Loch/100µ Spinndüse extrudiert und nach Passieren eines Luftspaltes von 60 mm in einem Wasserbad, Temperatur 23°C, Länge 20 cm die Cellulose ausgefällt.

Das angewandte Spinnverfahren wird als Trocken/Nass Spinnverfahren bezeichnet. Nach 15 Minuten Auswaschen der Restmenge an NMMO im Filament wurde bei 70°C getrocknet.

### Es wurden folgende Fasern erhalten:

### Methoden:

Textile Prüfungen nach der BISFA-Vorschrift "Internationally agreed methods for testing viscose, modal, cupro, lyocell, acetate and triacetate staple fibres and tows", Ausgabe 1993.

Phosphorgehalt: Aufschluss der Faser mit H₂SO₄/H₂O₂, photometrische Vermessung der Farbreaktion mit Ammonmolybdat.

| Daten: | |
|---|---|
| Titer (dtex) | 1,74 |
| Phosphorgehalt | 3,98 |
| Höchstzugkraft kond. (cN/tex) | 23,3 |
| Bruchdehnung kond. (%) | 9,4 |
| Höchstzugkraft nass (cN/tex) | 18,0 |
| Bruchdehnung nass (%) | 11,9 |
| BISFA-Modul (cN/tex, 5%) | 7,4 |
| Schlingenfestigkeit (cN/tex) | 15,6 |
| Schlingendehnung (%) | 4,7 |
| Knotenfestigkeit (cN/tex) | 20,6 |

Der Phosphorgehalt der Faser entspricht einer Einspinnausbeute von 86%. Die Differenz auf 100% beinhaltet Materialverlust durch an den Glasperlen der Mahlung anhaftendes Flammschutzmittel. Das Filament zeigte nach Kontakt mit einer Flamme selbstverlöschendes Verhalten.

### Beispiel 4

Eine wässrige Dispersion, die 10 Gew.% der Verbindung der Formel (1) gemäss Beispiel 1 und 1 Gew.% des Tensids Hypermer PS 2 der Fa. ICI enthielt, wurde in einer Perlmühle gemahlen, bis bei mikroskopischer Beurteilung keine Teilchen des Flammschutzmittels oberhalb von 5 µ sichtbar waren.

In einem Rührkessel wurde aus 3036 g 75%igem NMMO, 360 g Zellstoff Buckeye V 5 der Fa. Buckeye, Memphis, USA und 900 g der obigen Dispersion mittels Abdampfen der überschüssigen Wassermenge eine Spinnmasse hergestellt der Zusammensetzung 12% Cellulose / 3,0% Verbindung (1) / 73,4% NMMO / 11,6% H₂O.

Die Spinnmasse wurde mit einer Temperatur von 120°C und einer Ausstossmenge von 0,025g/Loch/min durch eine 200-Loch/100µ Spinndüse extrudiert, in einer Luftspalte von 30 mm Länge verstreckt und in einem wässrigen Spinnbad die Cellulose ausgefällt. Das angewandte Spinnverfahren wird als Trocken/Nass Spinnverfahren bezeichnet. Nach 30 Minuten Auswaschen der Restmenge an NMMO im Filament wurde bei 70°C getrocknet.

Es wurden folgende Fasern erhalten:

### Methoden:

Textile Prüfungen und Phosphorgehalt: Wie in Beispiel 3.

### Limiting Oxygen Index (LOI-Wert):

20 g eines Kardenvlieses wurden bei 180°C und 200 bar 1 Std. zu einem Prüfkörper Flächengewicht 76g/m², Dicke 0,15 mm verpresst. Dieser Prüfkörper wurde in einen Gasstrom bestehend aus Stickstoff und Sauerstoff eingebracht, dessen Sauerstoffanteil schrittweise erhöht wurde. Der LOI-Wert ist diejenige Sauerstoffkonzentration, bei der der Prüfkörper nach Entzündung gerade noch weiterbrennt.

| Daten: | |
|---|---|
| Titer (dtex) | 1,55 |
| Phosphorgehalt (%) | 2,68 |
| Höchstzugkraft kond. (cN//tex) | 35,6 |
| Bruchdehnung kond. (%) | 9,4 |
| Höchstzugkraft nass (cN/tex) | 30,2 |
| Bruchdehnung nass (%) | 13,4 |
| BISFA-Modul (cN/tex, 5%) | 11,6 |
| Schlingenfestigkeit (cN/tex) | 14,0 |
| Schlingendehnung (%) | 1,9 |
| Knotenfestigkeit (cN/tex) | 22,5 |
| LOI-Wert (%) | 24 |

## Patentansprüche

1. Regeneratcellulose, welche mindestens eine Verbindung der Formel I 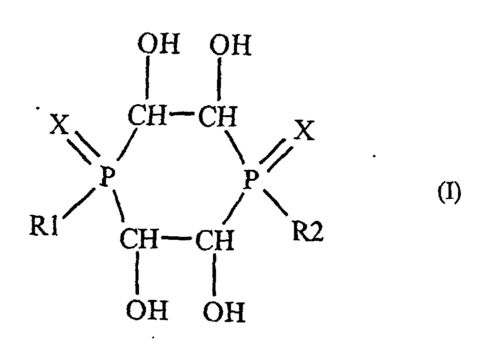 enthält, worin
R₁, R₂ unabhängig voneinander einen unsubstituierten oder substituierten C₁₋₁₂Alkyl, C₅₋₇Cycloalkyl-, C₇₋₁₂Aralkyl- oder C₆₋₁₂Aryl-Rest und
X Sauerstoff oder Schwefel bedeuten
und wobei die Regeneratcellulose durch Ausfällen aus einer Lösung in Aminoxiden, vorzugsweise N-Methylmorpholinoxid, gewonnen wird.

2. Regeneratcellulose nach Anspruch 1, **dadurch gekennzeichnet, daß** R₁ und R₂ iso-C₄H₉ und X Sauerstoff bedeutet.

3. Regeneratcellulose anch Anspruch 1 oder 2, **dadurch gekennzeichnet, daß** sie die Verbindung der Formel I in Mengen von 5 bis 35 Gew.-%, bevorzugt 10 bis 25 Gew.-%, besonders bevorzugt 25 Gew.-%, bezogen auf die reine, regenerierte Cellulose, enthält.

4. Regeneratcellulose nach einem der Ansprüche 1 bis 3, **dadurch gekennzeichnet, daß** die Cellulose als Faser oder Folie vorliegt.

5. Verfahren zum flammhemmenden Ausrüsten von Regeneratcellulose, **dadurch gekennzeichnet, daß** man mindestens eine Verbindung der Formel I nach Anspruch 1 einer Celluloselösung in Aminoxiden, vorzugsweise N-Methylmorpholinoxid in Mengen von 5 bis 35 Gew.-%, bezogen auf die reine Regeneratcellulose, nach bekannten Verfahren zugibt, einmischt und die Regeneratcellulose nach bekannten Verfahren aus der Celluloselösung ausfällt.

6. Verfahren nach Anspruch 5, **dadurch gekennzeichnet, daß** man eine Verbindung der Formel I in Mengen von 10 bis 25 Gew.-%, bevorzugt 25 Gew.-%, bezogen auf die reine, regenerierte Cellulose, zusetzt.

7. Verfahren nach einem der Ansprüche 5 oder 6, **dadurch gekennzeichnet, daß** die Celluloselösung zu Fasern oder Folien geformt wird.

8. Verwendung einer Verbindung der Formel I als flammhemmendes Mittel für Regeneratcellulose im Verfahren zur Herstellung von cellulosischen Formkörpern durch Ausfällen der Cellulose aus Lösungen in Aminoxiden, vorzugsweise N-Methylmorpholinoxid.

## Claims

1. Regenerated cellulose which contains at least one compound of formula 1 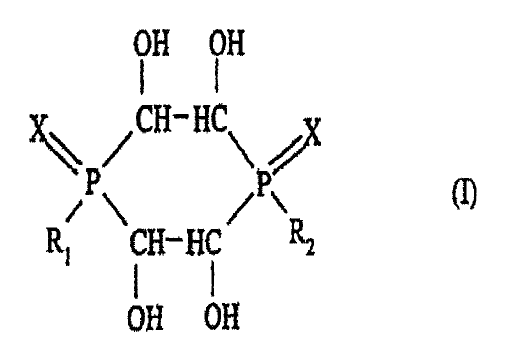 in which
R₁ , R₂ mean independently of each other an unsubstituted or substituted C₁₋₁₂ alkyl-, C₅₋₇ cycloalkyl-, C₇₋₁₂ aralkyl- or C₆₋₁₂ aryl-residue
and
X means oxygen or sulphur
and whereby the regenerated cellulose is won by the precipitation of a solution in amine oxides, preferably N-methyl morpholine oxide.

2. Regenerated cellulose in accordance with claim 1, **characterised in that** R₁ and R₂ mean iso-C₄H₉ and X means oxygen.

3. Regenerated cellulose in accordance with claim 1 or 2, **characterised in that** it contains the compound of formula 1 in amounts of 5 to 35 weight percentage, preferably 10 to 25 weight percentage, and in particular preferably 25 weight percentage, related to the pure regenerated cellulose.

4. Regenerated cellulose in accordance with one of claims 1 to 3, **characterised in that** the cellulose is present in the form of a fibre or film.

5. Process for the flame-retardant finishing of regenerated cellulose, **characterised in that** one adds at least one compound of formula 1 in accordance with claim 1 of a cellulose solution in amine oxides, preferably N-methyl morpholine oxide in amounts of 5 to 35 weight percentage, related to the pure regenerated cellulose in accordance with the well-known process, mixes this in and precipitates the regenerated cellulose from the cellulose solution in accordance with the well-known process.

6. Process in accordance with claim 5, **characterised in that** one adds a compound of formula 1 in amounts of 10 to 25 weight percentage, preferably 25 weight percentage, related to the pure regenerated cellulose.

7. Process in accordance with one of claims 5 or 6, **characterised in that** the cellulose solution is formed to fibres or films.

8. Use of a compound of formula 1 as a flame-retardant agent for regenerated cellulose in the process for the production of cellulosic moulded parts by precipitating the cellulose from solutions in amine oxides, preferably N-methyl morpholine oxide.

## Revendications

1. Cellulose régénérée qui contient au moins une combinaison de la formule I 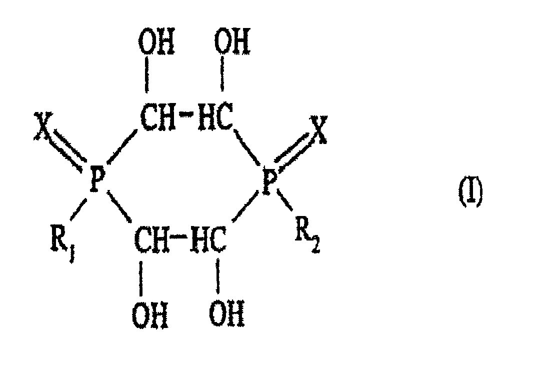 où
R₁ , R₂ constituent un alkyle C₁₋₁₂, un reste de cycloalkyle C₅₋₇, un reste d'aralkyle C₇₋₁₂ ou un reste d'aryle C₆₋₁₂ substitué ou non substitué, indépendant l'un de l'autre et
X de l'oxygène ou du soufre,
et où la cellulose régénérée est extraite par précipitation d'une solution dans des oxydes aminés, de préférence oxyde méthylmorpholine-N.

2. Cellulose régénérée selon la revendication 1, **caractérisée par le fait que** R₁ et R₂ signifient iso-C₄H₉ et X oxygène.

3. Cellulose régénérée selon la revendication 1 ou 2, **caractérisée par le fait qu'**elle contient la combinaison de la formule I dans des quantités de 5 à 35% en poids, de préférence 10 à 25% en poids et encore de préférence 25% en poids, rapportée à la cellulose régénérée pure.

4. Cellulose régénérée selon l'une des revendications 1 à 3, **caractérisée par le fait que** la cellulose se rencontre sous forme de fibre ou de film.

5. Procédé pour l'apprêt ignifuge de cellulose régénérée, **caractérisé par le fait que** l'on ajoute une combinaison de la formule I selon la revendication 1 à une solution de cellulose dans des oxydes aminés, de préférence oxyde méthylmorpholine-N dans des quantités de 5 à 35% en poids, rapporté à la cellulose régénérée pure, selon le procédé connu, que l'on mélange et que la cellulose régénérée est précipitée de la solution de cellulose selon le procédé connu.

6. Procédé selon la revendication 5, **caractérisé par le fait que** l'on ajoute une combinaison de la formule I dans des quantités de 10 à 25 % en poids, de préférence 25% en poids, rapportée à la cellulose régénérée pure.

7. Procédé selon l'une des revendications 5 ou 6, **caractérisé par le fait que** la solution de cellulose est formée en fibres ou films.

8. Utilisation d'une combinaison de la formule I en tant qu'agent ignifuge pour cellulose régénérée dans le procédé de fabrication de corps moulés cellulosiques par précipitation de la cellulose à partir de solutions dans des oxydes aminés, de préférence oxyde méthylmorpholine-N.
